# EUROPÄISCHE PATENTANMELDUNG

(11) **EP 4 213 046 A1**
(43) Veröffentlichungstag der Anmeldung: **19.07.2023**
(21) Anmeldenummer: 22212894.4
(22) Anmeldetag: 12.12.2022
(51) Int. Cl.: G06F 21/10, H04L 67/12

(54) **VERFAHREN UND VORRICHTUNG ZUR VERWALTUNG VON LIZENZEN IN EINEM INDUSTRIEAUTOMATIONSSYSTEM**

(30) Priorität: 14.01.2022 DE 102022100794
(71) Anmelder: Turck Holding GmbH, 58553 Halver (DE)
(72) Erfinder: Kriegel, Thomas, 58515 Lüdenscheid (DE)
(74) Vertreter: DTS Patent- und Rechtsanwälte Schnekenbühl und Partner mbB

(57) **Zusammenfassung**

Die Anmeldung betrifft ein Verfahren (400) zur Verwaltung von Funktionalitätslizenzen in einem geschlossenen Netzwerk (101) mit dem eine Vielzahl von Teilnehmervorrichtungen (110, 120, 130) verbunden ist, umfasst ein Betreiben (410) einer Lizenzdatenbank (110), wobei die Lizenzdatenbank eine Vielzahl von Funktionalitätslizenzen beinhaltet, wobei jede Funktionalitätslizenz eine Funktionalitätskennung umfasst. Weiter umfasst das Verfahren ein Empfangen (420) einer Lizenzanfrage von der Teilnehmervorrichtung (130), die mit dem geschlossenen Netzwerk (101) verbunden ist, wobei die Lizenzanfrage eine Funktionalitätskennung beinhaltet. Das Verfahren vergleicht (430) weiter die Funktionalitätskennung der Lizenzanfrage mit der Funktionalitätskennung der Vielzahl von Funktionalitätslizenzen und, wenn eine Funktionalitätskennung einer Funktionalitätslizenz aus der Vielzahl von Vorrichtungslizenzen der Funktionalitätskennung der Lizenzanfrage entspricht, weist es (440) die der Lizenzanfrage entsprechende Funktionalitätslizenz an die Teilnehmervorrichtung (130) zu, wobei das Zuweisen ein Speichern der Teilnehmervorrichtung (130) als lizenzierte Teilnehmervorrichtung in der Lizenzdatenbank umfasst. Weiter betrifft die Anmeldung eine Vorrichtung, die eingerichtet ist, das Verfahren auszuführen.

## Beschreibung

### Technisches Gebiet

Diese Anmeldung betrifft ein Industrieautomationssystem, das aus einem geschlossenen Netzwerk, z.B. einem Feldbus, und damit verbundenen Teilnehmervorrichtungen besteht.

### Hintergrund

In der Industrieautomation werden häufig diverse Vorrichtungen, wie z.B. speicherprogrammierbare Schnittstellen (SPS, englisch: programmable logic controller, PLC), Steuer- und Überwachungsterminals und Automatisierungsvorrichtungen, die einen industriellen Betrieb überwachen und steuern, über einen Feldbus miteinander gekoppelt, um eine schnelle Kommunikation und damit verbesserte Automation zu gewährleisten. Neben dieser Verbindung mit einem Feldbus müssen Vorrichtungen zudem in der Lage sein, z.B. mit Sensoren und Aktoren in der Feldebene zu interagieren, um den Industriebetrieb überwachen und steuern zu können. Zu diesem Zweck können Eingabe/Ausgabe-Module (E/A-Module) in den Feldbus eingebunden sein, die z.B. direkt oder indirekt, d.h. über eine Vorrichtung, wie z.B. ein Gateway, mit dem Feldbus verbunden sind. Aufgrund der zahlreichen möglichen Sensoren und Aktoren müssen diese E/A-Module zu diversen E/A-Konfigurationen bzw. Funktionalitäten fähig sein. E/A-Module können weiterhin zu diversen Logikfunktionen fähig sein, je nachdem welche Eingabe bzw. Ausgabe das E/A-Modul verarbeiten soll. Auch können die weiteren mit dem Feldbus gekoppelten Vorrichtungen zu unterschiedlichen Logikfunktionen fähig sein. Aufgrund der vielen möglichen E/A- sowie Logikfähigkeiten in der Industrieautomation sind in einem Industrieautomationssystem allerdings nicht für alle möglichen E/A- sowie Logikfähigkeiten Funktionalitätslizenzen vorhanden. Zudem ist ein Feldbus aus Sicherheitsgründen oft von externen Netzwerken entkoppelt oder nur sporadisch mit ihnen verbunden. Ein einfaches Ergänzen von Funktionalitätslizenzen in einem Industrieautomationssystem kann deshalb nur eingeschränkt möglich sein, womit nur eine bestimmte Menge an Funktionalitätslizenzen in dem Industrieautomationssystem vorhanden sein kann. Vor diesem Hintergrund besteht ein Bedarf, Lizenzen in einem Industrieautomationssystem hinsichtlich der bestimmten Menge einerseits und den gewünschten Funktionalitäten der E/A-Module und Vorrichtungen des Industrieautomationssystems andererseits zu verwalten.

### Zusammenfassung

Diese Aufgabe wird gemäß einer Ausführungsform durch ein Verfahren zur Verwaltung von Funktionalitätslizenzen in einem geschlossenen Netzwerk gelöst, wobei eine Vielzahl von Teilnehmervorrichtungen mit dem geschlossenen Netzwerk verbunden ist, umfassend. Gemäß dem Verfahren wird eine Lizenzdatenbank betrieben, wobei die Lizenzdatenbank eine Vielzahl von Funktionalitätslizenzen beinhaltet, wobei jede Funktionalitätslizenz eine Funktionalitätskennung umfasst. Weiter wird eine Lizenzanfrage von der Teilnehmervorrichtung empfangen, die mit dem geschlossenen Netzwerk verbunden ist, wobei die Lizenzanfrage eine Funktionalitätskennung beinhaltet. Die Funktionalitätskennung der Lizenzanfrage wird dann mit der Funktionalitätskennung der Vielzahl von Funktionalitätslizenzen verglichen. Wenn eine Funktionalitätskennung einer Funktionalitätslizenz aus der Vielzahl von Vorrichtungslizenzen der Funktionalitätskennung der Lizenzanfrage entspricht, wird die der Lizenzanfrage entsprechenden Funktionalitätslizenz an die Teilnehmervorrichtung zugewiesen, wobei das Zuweisen ein Speichern der Teilnehmervorrichtung als lizenzierte Teilnehmervorrichtung in der Lizenzdatenbank umfasst.

Weiter wird gemäß einer Ausführungsform diese Aufgabe durch eine Vorrichtung gelöst, die mindestens eine Kommunikationsschnittstelle umfasst, wobei die mindestens eine Kommunikationsschnittstelle eingerichtet ist, um mit einem geschlossenen Netzwerk gekoppelt zu werden. Weiter umfasst die Vorrichtung einen Speicher, der eingerichtet ist, um eine Lizenzdatenbank und Programmanweisungen, die das oben genannte Verfahren ausführen, zu speichern. Schließlich umfasst die Vorrichtung einen Prozessor, der eingerichtet ist, um die in dem Speicher gespeicherten Programmanweisungen auszuführen.

### Kurze Beschreibung der Figuren

Die diese Beschreibung begleitenden Figuren dienen der Veranschaulichung der Ausführungsformen dieser Beschreibung, wobei sich gleiche Bezugszeichen auf gleiche Komponenten beziehen.
Fig. 1 zeigt ein Blockdiagram eines Industrieautomationssystems gemäß einer Ausführungsform.
Fig. 2 zeigt ein Blockdiagram eines Lizenzservers, der ein Verfahren zur Verwaltung von Funktionalitätslizenzen gemäß einer Ausführungsform ausführen kann.
Fig. 3 zeigt ein Blockdiagram einer Teilnehmervorrichtung gemäß einer Ausführungsform.
Fig. 4 zeigt ein Flussdiagram eines Verfahrens zur Verwaltung von Funktionalitätslizenzen gemäß einer Ausführungsform.

### Detaillierte Beschreibung

Die folgende detaillierte Beschreibung beschreibt unter Bezugnahme auf die beigefügten Figuren beispielhafte Ausführungsformen, die ein Verfahren und eine Vorrichtung zur Verwaltung von Funktionalitätslizenzen in einem Industrieautomationssystem veranschaulichen. Die beispielhaften Ausführungsformen dienen nicht dazu, den Gegenstand der vorliegenden Anmeldung auf die hier beschriebenen Ausführungsformen zu beschränken. Vielmehr dienen diese beispielhaften Ausführungsformen der Veranschaulichung des Gegenstandes der vorliegenden Anmeldung und können im Rahmen dieser Offenbarung modifiziert und miteinander kombiniert werden. Das Modifizieren der beispielhaften Ausführungsformen schließt dabei ein Weglassen nicht zwingend benötigter Merkmale mit ein.

Gemäß einer Ausführungsform wird ein Verfahren zur Verwaltung von Funktionalitätslizenzen in einem geschlossenen Netzwerk ausgeführt. Das geschlossene Netzwerk kann jedes für ein Industrieautomationssystem geeignete Netzwerk sein, wie z.B. PROFIBUS-DP, DeviceNET, CANopen, Modbus TCP, EtherNet/IP, EtherCAT und PROFINET. Zudem kann das geschlossene Netzwerk neben drahtgebunden auch drahtlos sein, solange die Anforderungen, insbesondere hinsichtlich Sicherheit, an ein Netzwerk eines Industrieautomationssystems erfüllt sind. Unter einem geschlossenen Netzwerk ist hier zu verstehen, dass das Netzwerk von öffentlichen Netzwerken, wie z.B. dem Internet, jedenfalls soweit entkoppelt ist, dass den Sicherheitsanforderungen an ein Netzwerk eines Industrieautomationssystems genüge getan ist. In einigen Fällen kann dies bedeuten, dass keine Teilnehmervorrichtung des geschlossenen Netzwerks mit einem anderen, insbesondere öffentlichen Netzwerk verbunden ist. In einigen Fällen kann dies bedeuten, dass eine oder mehrere speziell gesicherte Teilnehmervorrichtungen zumindest sporadisch auch auf ein getrenntes Netzwerk zugreifen können, solange sie einen direkten Zugriff von dem getrennten Netzwerk auf das geschlossene Netzwerk über sich verhindern können. Diese Entkopplung des geschlossenen Netzwerks von getrennten Netzwerken erhöht die Sicherheit des Industrieautomationssystems.

Eine Vielzahl von Teilnehmervorrichtungen ist mit dem geschlossenen Netzwerk verbunden. Teilnehmervorrichtungen können jede denkbare Vorrichtung sein, die mit einem geschlossenen Netzwerk im in einem Industrieautomationssystem verbunden sein können. Beispielsweise können dies SPS, Überwachungsterminals, Automatisierungsvorrichtungen oder Gateways sein, wobei die Gateways eine Verbindung mit Sensoren und Aktoren der Feldebene über E/A-Module herstellen. Zusätzlich oder alternativ können sowohl die E/A-Module als auch die Sensoren und Aktoren auch direkt mit dem geschlossenen Netzwerk verbunden sein.

Das Verfahren betreibt eine Lizenzdatenbank, wobei die Lizenzdatenbank eine Vielzahl von Funktionalitätslizenzen beinhaltet, wobei jede Funktionalitätslizenz eine Funktionalitätskennung umfasst. Die Lizenzdatenbank kann jede geeignete Datenbank sein, die Funktionalitätslizenzen speichern, löschen und verändern kann. Jede Funktionalitätslizenz in der Lizenzdatenbank umfasst zumindest eine Funktionalitätskennung, die Z.B. eine numerische oder alphanumerische Kennung mit fester oder mit variabler Länge sein kann. Die Funktionalitätskennung gibt eine Logikfunktion oder eine E/A-Funktion an, die zur Verwendung durch Teilnahmevorrichtungen des geschlossenen Netzwerks zur Lizensierung zur Verfügung stehen. Die Funktionalitätskennung kann auch eine Kombination von E/A- und Logikfunktionen angeben. Zudem kann jede Funktionalitätslizenz weitere Informationen umfassen, je nach den Bedürfnissen des jeweiligen Industrieautomationssystems. Die Lizenzdatenbank kann folglich jede Datenbank sein, die solche Informationen speichern, löschen und verändern kann. Die Lizenzdatenbank kann auf einem dedizierten Lizenzserver gespeichert sein, der mit dem geschlossenen Netzwerk verbunden ist. Alternativ kann die Lizenzdatenbank auch auf einer Teilnehmervorrichtung des geschlossenen Netzwerks gespeichert sein, die auch weitere Aufgaben in dem geschlossenen Netzwerk unternimmt. Alternativ kann die Lizenzdatenbank auch auf der SPS des geschlossenen Netzwerks gespeichert sein, wenn eine solche in dem geschlossenen Netzwerk vorgesehen ist. Durch das Speichern der Lizenzdatenbank in dem geschlossenen Netzwerk kann das Industrieautomationssystem die Funktionalitätslizenzen verwalten, ohne, dass Zugriffe auf andere Netzwerke notwendig wären, die die Sicherheit des Industrieautomationssystems gefährden könnten.

Die Lizenzdatenbank empfängt eine Lizenzanfrage von einer Teilnehmervorrichtung, die mit dem geschlossenen Netzwerk verbunden ist. Die Lizenzanfrage beinhaltet eine Funktionalitätskennung, die dann mit der Funktionalitätskennung der Vielzahl von Funktionalitätslizenzen verglichen wird. Die Funktionalitätskennung der Lizenzanfrage entspricht dabei im Wesentlichen der Funktionalitätskennung der Funktionalitätslizenzen in der Lizenzdatenbank.

Wenn eine Funktionalitätskennung einer Funktionalitätslizenz aus der Vielzahl von Vorrichtungslizenzen der Funktionalitätskennung der Lizenzanfrage entspricht, wird die der Lizenzanfrage entsprechende Funktionalitätslizenz an die Teilnehmervorrichtung zugewiesen, wobei das Zuweisen ein Speichern der Teilnehmervorrichtung als lizenzierte Teilnehmervorrichtung in der Lizenzdatenbank umfasst. Dabei kann die Lizenzdatenbank z.B. eine Teilnehmervorrichtungskennung in dem Eintrag der Funktionalitätslizenz speichern, der die Teilnehmervorrichtung eindeutig identifiziert. Die Teilnehmervorrichtungskennung kann z.B. eine MAC-Adresse oder eine IP-Adresse oder jede andere eindeutige Kennung sein, die zur Identifikation von Teilnehmervorrichtungen gemäß dem Protokoll verwendet wird, das für das geschlossene Netzwerk verwendet wird.

Das Verfahren kann gemäß einer Ausführungsform weiterhin das geschlossene Netzwerk scannen, um zu überprüfen, ob die lizenzierte Teilnehmervorrichtung noch mit dem geschlossenen Netzwerk verbunden ist. Ergibt das Scannen, dass die lizenzierte Teilnehmervorrichtung nicht mehr mit dem geschlossenen Netzwerk verbunden ist, löscht die Datenbank die Teilnehmervorrichtung als lizenzierte Teilnehmervorrichtung.

Das Scannen nach einer lizenzierten Teilnehmervorrichtung kann z.B. ausgeführt werden, indem die Vorrichtung, auf dem die Lizenzdatenbank gespeichert ist, versucht, die lizenzierte Teilnehmervorrichtung zu kontaktieren. Dies geschieht z.B. unter Verwendung der Teilnehmervorrichtungskennung, die in der Lizenzdatenbank in dem Eintrag der Funktionalitätslizenz gespeichert worden ist, die der Teilnehmervorrichtung zugewiesen worden ist. Kann die Teilnehmervorrichtung nicht kontaktiert werden, wird die Teilnehmervorrichtung als lizensierte Teilnehmervorrichtung gelöscht, damit die Funktionalitätslizenz wieder in dem geschlossenen Netzwerk zur Verfügung steht. Dabei kann die Teilnehmervorrichtung zur Vermeidung von falschem Löschen z.B. erst als lizenzierte Teilnehmervorrichtung gelöscht werden, wenn eine bestimmte Anzahl von Kontaktversuchen fehlgeschlagen ist oder wenn eine bestimmte Zeit auf den Kontaktversuch hin vergangen ist. Das Löschen der Teilnehmervorrichtung als lizenzierte Teilnehmervorrichtung kann z.B. erfolgen, indem die Teilnehmervorrichtungskennung der Teilnehmervorrichtung in dem Eintrag der ihr zugewiesenen Teilnehmervorrichtung gelöscht wird oder anderweitig in dem Eintrag der Funktionalitätslizenz kenntlich gemacht wird, dass die Lizenz wieder zugewiesen werden kann.

Das Verfahren kann gemäß einer Ausführungsform weiterhin die Vielzahl von Teilnehmervorrichtungen abfragen, um die in dem geschlossenen Netzwerk zugewiesenen Funktionalitätslizenzen zu bestimmen. Z.B. kann die Vorrichtung, auf der die Lizenzdatenbank gespeichert ist, alle Teilnehmervorrichtungen, die mit dem geschlossenen Netzwerk verbunden sind, kontaktieren. Dies kann z.B. über ein Broadcast-Signal oder jede andere Art erfolgen, die nach dem für das geschlossene Netzwerk verwendete Protokoll möglich ist, um alle Teilnehmervorrichtungen zu kontaktieren. In Antwort auf diese Kontaktierung antworten die Teilnehmervorrichtungen mit den Ihnen zugewiesenen Funktionalitätslizenzen. Diese Funktionalitätslizenzen werden mit den Funktionalitätslizenzen der Vielzahl von Funktionalitätslizenzen abgeglichen. Dieser Abgleich kann einen Vergleich der jeweiligen Art an Funktionalitätslizenz über die Funktionalitätskennung und ein Zählen der im geschlossenen Netzwerk gefundenen jeweiligen Anzahl der Art an Funktionalitätslizenz beinhalten. Wenn der Abgleich ergibt, dass eine in dem geschlossenen Netzwerk zugewiesene Funktionalitätslizenz nicht in der Vielzahl von Funktionalitätslizenzen beinhaltet ist, wird die jeweilige zugewiesene Funktionalitätslizenz zu der Vielzahl von Funktionalitätslizenzen in der Lizenzdatenbank hinzugefügt. Ergibt z.B. der Abgleich zwischen den im geschlossenen Netzwerk zugewiesenen Funktionalitätslizenzen und der Vielzahl an Funktionalitätslizenzen, dass von einer Funktionalitätslizenz der Art "x" fünf Lizenzen im geschlossenen Netzwerk vorhanden sind, die Lizenzdatenbank aber nur drei von der Art "x" beinhaltet, werden zwei Funktionalitätslizenzen dieser Art der Lizenzdatenbank hinzugefügt. Durch das Abfragen, Abgleichen und Hinzufügen können z.B. durch neu zu dem geschlossenen Netzwerk hinzugefügte Teilnehmervorrichtungen Funktionalitätslizenzen zu der Lizenzdatenbank hinzugefügt werden. Wird z.B. das Industrieautomationssystem durch zusätzliche Teilnehmervorrichtungen erweitert, die mit vor-zugewiesenen Funktionalitätslizenzen versehen sind, kann die Lizenzdatenbank gleichzeitig miterweitert werden. Damit kann die Lizenzdatenbank erweitert werden, ohne, dass eine die Sicherheit des geschlossenen Netzwerks ggf. beeinträchtigende Verbindung zwischen dem Lizenzserver und einem externen Lizenzserver aufgebaut werden muss.

Weiterhin kann gemäß einer Ausführungsform eine Teilnehmervorrichtung eine zugewiesene Funktionalitätslizenz an die Lizenzdatenbank zurückgeben. Dies kann z.B. geschehen, indem die Teilnehmervorrichtung eine Nachricht an die Vorrichtung sendet, auf der die Lizenzdatenbank gespeichert ist, dass sie die Funktionalitätslizenz nicht mehr benötigt. In Antwort auf das Zurückgeben, löscht die Lizenzdatenbank die Teilnehmervorrichtung als lizenzierte Teilnehmervorrichtung. Das Löschen kann z.B. geschehen wie weiter oben im Anschluss an den Schritt des Scannens beschrieben.

Entspricht keine Funktionalitätslizenz aus der Vielzahl von Vorrichtungslizenzen der Funktionalitätskennung der Lizenzanfrage, kann die Lizenzdatenbank gemäß einer Ausführungsform eine Fehlernachricht an die Teilnehmervorrichtung senden. Diese Fehlernachricht kann z.B. von der Vorrichtung, auf der die Lizenzdatenbank gespeichert ist, über das geschlossene Netzwerk gemäß dem von dem geschlossenen Netzwerk verwendeten Protokoll erfolgen.

Entspricht keine Funktionalitätslizenz aus der Vielzahl von Vorrichtungslizenzen der Funktionalitätskennung der Lizenzanfrage, kann die Lizenzdatenbank gemäß einer Ausführungsform eine externe Lizenzdatenbank über eine sichere Verbindung über ein von dem geschlossenen Netzwerk getrenntes Netzwerk kontaktieren, um eine der Funktionalitätskennung der Lizenzanfrage entsprechende Funktionalitätslizenz zu der Vielzahl von Funktionalitätslizenzen hinzuzufügen. Das getrennte Netzwerk kann das Internet sein oder ein anderes Netzwerk eines Betriebs sein, in dem sich das Industrieautomationssystem befindet. Unter einer sicheren Verbindung ist eine geschützte bzw. verschlüsselte Verbindung zu verstehen, die z.B. TLS oder DTLS oder andere Protokolle verwendet, um die Verbindung zu der externen Lizenzdatenbank zu sichern. Durch die Kontaktierung einer externen Lizenzdatenbank kann die Lizenzdatenbank um Funktionalitätslizenzen erweitert werden, die sonst ggf. für die gewünschte Funktionalität des Industrieautomationssystems fehlen würden.

Jede Funktionalitätslizenz der Vielzahl von Funktionalitätslizenzen kann gemäß einer Ausführungsform weiterhin eine oder mehrere von einer Vorrichtungsklassenkennung und einer Lizenznehmerkennung umfassen. Die Vorrichtungsklassenerkennung kann angeben, für welche Klasse von Teilnehmervorrichtung eine bestimmte Funktionalitätslizenz bestimmt ist. Die Lizenznehmerkennung kann den Betrieb identifizieren, dem die Lizenzen gehören und kann z.B. verwendet werden, wenn die Lizenzdatenbank mit einer externen Datenbank kommuniziert, um Funktionalitätslizenzen hinzuzufügen, die nicht vom Betrieb des Industrieautomationssystems betrieben wird.

Die Funktionalitätskennung jeder Funktionalitätslizenz der Vielzahl von Funktionalitätslizenzen kann gemäß einer Ausführungsform eine lizenzierte Parametrierung der Teilnehmervorrichtung beinhalten. Die Parametrierung beinhaltet dabei einen Parametersatz, der Funktionen einer Teilnehmervorrichtung definiert, die lizensiert sind. Die Funktionalitätskennung der Lizenzanfrage kann eine Parametrierung beinhalten, die der Teilnehmervorrichtung von einer SPS des geschlossenen Netzwerks zugewiesen worden ist. In einigen Industrieautomationssystemen kann eine SPS eine Parametrierung, d.h. einen Parametersatz, der Funktionen einer Teilnehmervorrichtung definiert, einer Teilnehmervorrichtung zuweisen. Die Teilnehmervorrichtung kann diese Parametrierung dann als Lizenzanfrage an die Datenbank weiterleiten, um eine Lizenz für die von der SPS zugewiesene Parametrierung zu erhalten.

Die Funktionalitätskennung kann gemäß einer Ausführungsform eine oder mehrere angeben von einer Logikfunktion einer Teilnehmervorrichtung und einer Funktion einer E/A-Schnittstelle der Teilnehmervorrichtung. Eine Logikfunktion kann z.B. die Behandlung eines Messwerts beinhalten, wie z.B. den Vergleich mit einem Schwellwert oder die Umwandlung des Messwerts in einen bestimmten Logikwert basierend auf einer vordefinierten Logikfunktion. Eine Funktion einer E/A-Schnittstelle kann z.B. beinhalten, ob die Ein- und Ausgänge als analoge oder digitale Ein- und Ausgänge verwendet sein sollen. Weiterhin kann eine Funktion einer E/A-Schnittstelle beinhalten, ob die Ein- und Ausgänge ein Spannungssignal oder ein Stromsignal empfangen und mit welchem Pegel. Eine Funktion einer E/A-Schnittstelle kann weiterhin beinhalten mit welcher Art Sensor die Ein- und Ausgänge gekoppelt sind, z.B. Platin-Sensoren, Nickel-Sensoren, Thermoelemente oder Widerstände.

Die Lizenzdatenbank kann gemäß einer Ausführungsform initialisiert werden durch Abfragen der Vielzahl von Teilnehmervorrichtungen, um die in dem geschlossenen Netzwerk zugewiesenen Funktionalitätslizenzen zu bestimmen und Hinzufügen der in dem geschlossenen Netzwerk zugewiesenen Funktionalitätslizenzen zu der Vielzahl von Funktionalitätslizenzen. Beide Schritte entsprechen im Wesentlichen den Schritten Abfragen und Hinzufügen, die bereits besprochen wurden. Im Kontext der Initialisierung dienen diese Schritte dazu, die im geschlossenen Netzwerk vorhanden Funktionalitätslizenzen in die Lizenzdatenbank einzutragen. Dies kann z.B. erfolgen bei einer erstmaligen Initialisierung der Lizenzdatenbank nach Start des Industrieautomationssystem. Dies kann aber auch nach einem Neustart der Lizenzdatenbank, z.B. in Folge eines Stromausfalls oder eines anderen Fehlers der Lizenzdatenbank und/oder des Industrieautomationssystems erfolgen. In solch einem Fehlerfall ermöglichen das Abfragen und Hinzufügen eine schnelle Wiederherstellung des Industrieautomationssystems, ohne, dass eine unsichere Verbindung mit einem getrennten Netzwerk aufgebaut werden muss.

Die Lizenzdatenbank kann gemäß einer Ausführungsform initialisiert werden durch Kontaktieren einer externen Lizenzdatenbank über eine sichere Verbindung über ein von dem geschlossenen Netzwerk getrenntes Netzwerk, wobei die Vielzahl von Funktionalitätslizenzen von der externen Datenbank auf die Lizenzdatenbank übertragen wird. Der Schritt des Kontaktierens entspricht im Wesentlichen dem zuvor besprochenen Schritt eines Kontaktierens. Das Initialisieren der Lizenzdatenbank über die externe Datenbank ermöglicht es, alle für den Betrieb verfügbaren Funktionalitätslizenzen in Lizenzdatenbank einzutragen. Dies kann z.B. einmalig bei der Inbetriebnahme des Industrieautomationssystems passieren oder in regelmäßigen Intervallen in Form einer Aktualisierung des Bestands an Funktionalitätslizenzen des Betriebs. Außerdem kann dies z.B. nach einem Fehlerfall der Lizenzdatenbank und/oder des Industrieautomationssystems durchgeführt werden.

Die vorangegangenen Verfahrensschritte können, soweit nicht schon angegeben, gemäß einer Ausführungsform von einer Vorrichtung ausgeführt werden. Diese umfasst mindestens eine Kommunikationsschnittstelle, wobei die mindestens eine Kommunikationsschnittstelle eingerichtet ist, um mit einem geschlossenen Netzwerk gekoppelt zu werden. Dabei kann die Kommunikationsschnittstelle jede Kommunikationsschnittstelle sein, die nach dem verwendeten Typ an geschlossenem Netzwerk für die Verbindung mit diesem geeignet ist. Die Kommunikationsschnittstelle kann z.B. ein Ethernet-Port bei einem drahtgebundenen geschlossenen Netzwerk sein oder eine Wifi-Schnittstelle bei einem drahtlosen geschlossenen Netzwerk. Die Vorrichtung umfasst zudem einen Speicher, der eingerichtet ist, um eine Lizenzdatenbank und Programmanweisungen, die die oben diskutierten Verfahrensschritte auszuführen, zu speichern. Der Speicher kann jede Form von nicht-flüchtigem Speicher beinhalten, wie z.B. eine Festplatte oder NAND-Flash. Schließlich umfasst die Vorrichtung einen Prozessor, der eingerichtet ist, um die in dem Speicher gespeicherten Programmanweisungen auszuführen. Der Prozessor kann dabei jede gängige Art von Prozessor sein, wie. z.B. ein X86 oder AMD86-basierter Prozessor, ein ARM-basierter Prozessor oder ein RISC-V-basierter Prozessor.

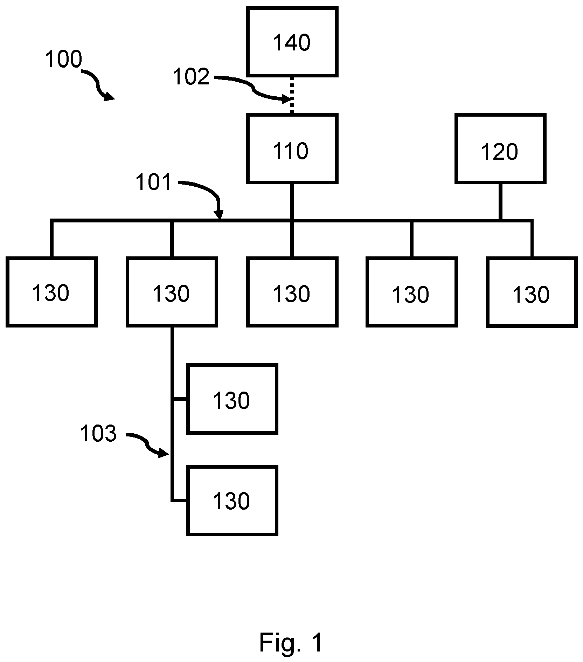

Fig. 1 zeigt ein beispielhaftes Industrieautomationssystem 100, das ein geschlossenes Netzwerk 101 beinhaltet, mit dem ein Lizenzserver 110, eine SPS 120 und mehrere Teilnehmervorrichtungen 130 gekoppelt sind. Die Lizenzdatenbankvorrichtung 120 ist zudem optional mit einer externen Lizenzdatenbank 140 über ein getrenntes Netzwerk 102 gekoppelt. Der Lizenzserver 110 ist hier als eigenständige Vorrichtung gezeigt, kann aber auch Teil einer Teilnehmervorrichtung 130 oder der SPS 120 sein. Auch die SPS 120 ist in Fig. 1 als eigenständig gezeigt, kann aber Teil einer Teilnehmervorrichtung 130 sein.

Das Industrieautomationssystem kann weiterhin ein Modulnetzwerk 103 beinhalten, das über eine als Gateway eingerichtete Teilnehmervorrichtung 130 mit dem geschlossenen Netzwerk 101 verbunden ist. Die mit dem Modulnetzwerk 103 verbundenen Teilnehmervorrichtungen 130 können E/A-Module sein, die mit Sensoren und Aktoren in der Feldebene verbunden sind. Die E/A-Module können alternativ oder zusätzlich auch direkt mit dem geschlossenen Netzwerk 101 verbunden sein. Z.B. können einige der direkt mit dem geschlossenen Netzwerk verbundenen Teilnehmervorrichtungen E/A-Module sein. Das Modulnetzwerk 103 kann das gleiche Protokoll verwenden wie das geschlossene Netzwerk 101 oder kann ein anderes Protokoll verwenden als das geschlossene Netzwerk 101. Modulnetzwerk 103 kann drahtlos oder drahtgebunden sein.

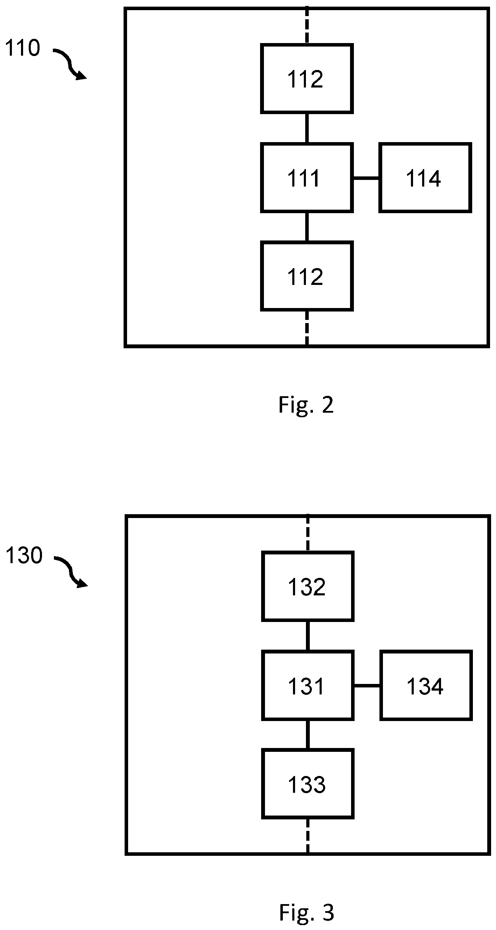

Fig. 2 zeigt einen beispielhaften Lizenzserver 110, der einen Prozessor 111, zwei Kommunikationsschnittstellen 112 und einen Speicher 114 beinhaltet. Die durchgezogenen Verbindungen stellen interne Verbindungen des Lizenzservers 110 dar. Die gestrichelten Verbindungen stellen Verbindungen zu externen Netzwerken dar. Der Lizenzserver 110 kann in seinem Speicher 114 die zuvor besprochene Lizenzdatenbank und Programmanweisungen zur Ausführung der Ausführungsformen des Verfahrens zur Verwaltung von Funktionalitätslizenzen speichern.

Der Lizenzserver 110 der Fig. 2 beinhaltet zwei Kommunikationsschnittstellen 112 in Anlehnung an die Darstellung des Lizenzservers 110 in Fig. 1. Dort ist der Lizenzserver als mit dem geschlossenen Netzwerk 101 und dem getrennten Netzwerk 102 verbunden dargestellt. In Fig. 2 weist der Lizenzserver für diese beiden Verbindungen getrennte Kommunikationsschnittstellen 112 auf. Alternativ kann die Verbindung zu beiden Netzwerken auch über eine Kommunikationsschnittstelle 112 erfolgen. Alternativ kann der Lizenzserver 110 ausschließlich mit dem geschlossenen Netzwerk 101 verbunden sein. Über die Kommunikationsschnittstelle 112 kann der Lizenzserver 110 z.B. Lizenzanfragen empfangen, nach lizenzierten Teilnehmervorrichtungen scannen, Fähigkeitslizenzen zuweisen, Nachrichten über die Rückgabe von Funktionalitätslizenzen erhalten und mit der externen Datenbank zum Hinzufügen einer Funktionalitätslizenz oder zum Initialisieren der Lizenzdatenbank kommunizieren.

Fig. 3 zeigt eine beispielhafte Teilnehmervorrichtung 130, der einen Prozessor 131, eine Kommunikationsschnittstellen 132, eine E/A-Schnittstelle 133 und einen Speicher 134 beinhaltet. Die durchgezogenen Verbindungen stellen interne Verbindungen der Teilnehmervorrichtung 130 dar. Die gestrichelten Verbindungen stellen Verbindungen zu dem geschlossenen Netzwerk 101 und zu Sensoren und Aktoren in der Feldebene da. Der Prozessor 131 kann eingerichtet sein, Logikfunktionalitäten auszuführen, für die Funktionalitätslizenzen benötigt werden können. Die E/A-Schnittstelle kann für diverse E/A-Funktionalitäten eingerichtet sein, für die ebenfalls Funktionalitätslizenzen benötigt werden können. Lizenzanfragen für benötigte Funktionalitätslizenzen kann die Teilnehmervorrichtung 130 über die Kommunikationsschnittstelle 132 absenden. Die in Antwort auf die Lizenzanfrage zugewiesene Lizenz vom Lizenzserver 110 kann die Teilnehmervorrichtung im Speicher 134 speichern.

Mit Ausnahme der E/A-Schnittstelle 133 entsprechen die Komponenten der Teilnehmervorrichtung 130 denen der Lizenzvorrichtung 110. Entsprechend kann der Lizenzserver 110 auch auf der Teilnehmervorrichtung 130 implementiert werden.

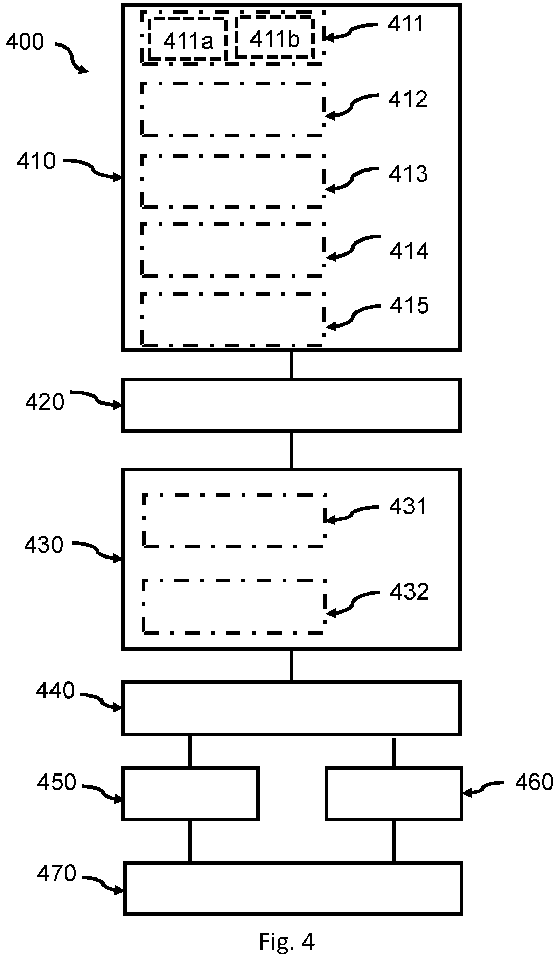

Fig. 4 zeigt ein beispielhaftes Verfahren 400 zur Verwaltung von Funktionalitätslizenzen in dem geschlossenen Netzwerk 101 der Fig. 1.

In Schritt 410 betreibt das Verfahren die Lizenzdatenbank 110, wobei die Lizenzdatenbank eine Vielzahl von Funktionalitätslizenzen beinhaltet, wobei jede Funktionalitätslizenz eine Funktionalitätskennung umfasst.

Zusätzlich kann Schritt 410 einen Schritt 411 beinhalten, in dem die Lizenzdatenbank initialisiert wird, indem in einem Schritt 411a die Teilnehmervorrichtungen 130 durch den Lizenzserver abgefragt werden, um die in dem geschlossenen Netzwerk 101 zugewiesenen Funktionalitätslizenzen zu bestimmen, die in Schritt 411b zu der Vielzahl von Funktionalitätslizenzen hinzugefügt werden. Weiter zusätzlich kann Schritt 410 einen Schritt 412 beinhalten, in dem die Lizenzdatenbank initialisiert wird, indem der Lizenzserver 120 die externe Lizenzdatenbank 140 über eine sichere Verbindung über das von dem geschlossenen Netzwerk 101 getrennte Netzwerk 102 kontaktiert, wobei die Vielzahl von Funktionalitätslizenzen von der externen Datenbank 140 auf die Lizenzdatenbank übertragen wird.

Weiterhin kann Schritt 410 einen Schritt 413 beinhalten, in dem die Teilnehmervorrichtungen 130 abgefragt werden, um die in dem geschlossenen Netzwerk 101 zugewiesenen Funktionalitätslizenzen zu bestimmen. Die so bestimmten zugewiesenen Funktionalitätslizenzen werden in Schritt 414 mit der Vielzahl von Funktionalitätslizenzen abgeglichen. Ergibt der Abgleich in Schritt 414, dass eine in dem geschlossenen Netzwerk 101 zugewiesene Funktionalitätslizenz nicht in der Vielzahl von Funktionalitätslizenzen beinhaltet ist, werden in einem Schritt 415 die zugewiesenen Funktionalitätslizenzen zu der Vielzahl von Funktionalitätslizenzen hinzugefügt.

In Schritt 420 empfängt der Lizenzserver 120 eine Lizenzanfrage von der Teilnehmervorrichtung 130, die mit dem geschlossenen Netzwerk 101 verbunden ist, wobei die Lizenzanfrage eine Funktionalitätskennung beinhaltet;

In Schritt 430 vergleicht der Lizenzserver 120 die Funktionalitätskennung der Lizenzanfrage mit der Funktionalitätskennung der Vielzahl von Funktionalitätslizenzen. Zudem kann Schritt 430 einen Schritt 431 beinhalten, in dem die Lizenzvorrichtung 120 eine Fehlernachricht an die Teilnehmervorrichtung 130 sendet, wenn keine Funktionalitätskennung einer Funktionalitätslizenz aus der Vielzahl von Vorrichtungslizenzen der Funktionalitätskennung der Lizenzanfrage entspricht. Zudem kann Schritt 430 einen Schritt 432 beinhalten, in dem der Lizenzserver 120 über eine sichere Verbindung über das getrennte Netzwerk 102 die externe Lizenzdatenbank 140 kontaktiert, um eine der Funktionalitätskennung der Lizenzanfrage entsprechende Funktionalitätslizenz zu der Vielzahl von Funktionalitätslizenzen hinzuzufügen, wenn keine Funktionalitätskennung einer Funktionalitätslizenz aus der Vielzahl von Vorrichtungslizenzen der Funktionalitätskennung der Lizenzanfrage entspricht.

In Schritt 440 weist der Lizenzserver 120 die der Lizenzanfrage entsprechenden Funktionalitätslizenz der Teilnehmervorrichtung 130 zu, wenn eine Funktionalitätskennung einer Funktionalitätslizenz aus der Vielzahl von Vorrichtungslizenzen der Funktionalitätskennung der Lizenzanfrage entspricht, wobei das Zuweisen ein Speichern der Teilnehmervorrichtung 130 als lizenzierte Teilnehmervorrichtung in der Lizenzdatenbank umfasst.

In Schritt 450 scannt der Lizenzserver das geschlossene Netzwerk 101, um zu überprüfen, ob die lizenzierte Teilnehmervorrichtung 130 noch mit dem geschlossenen Netzwerk 101 verbunden ist. Wenn das Scannen ergibt, dass die lizenzierte Teilnehmervorrichtung 130 nicht mehr mit dem geschlossenen Netzwerk verbunden ist, wird in Schritt 470 die Teilnehmervorrichtung als lizenzierte Teilnehmervorrichtung gelöscht.

In Schritt 460 gibt die Teilnehmervorrichtung 130 eine zugewiesene Funktionalitätslizenz an die Lizenzdatenbank durch die Teilnehmervorrichtung zurück. In Antwort auf das Zurückgeben, löscht der Lizenzserver in Schritt 470 die Teilnehmervorrichtung 130 als lizenzierte Teilnehmervorrichtung.

## Patentansprüche

1. Verfahren (400) zur Verwaltung von Funktionalitätslizenzen in einem geschlossenen Netzwerk (101), wobei eine Vielzahl von Teilnehmervorrichtungen (110, 120, 130) mit dem geschlossenen Netzwerk (101) verbunden ist, umfassend:
Betreiben (410) einer Lizenzdatenbank (110), wobei die Lizenzdatenbank eine Vielzahl von Funktionalitätslizenzen beinhaltet, wobei jede Funktionalitätslizenz eine Funktionalitätskennung umfasst;
Empfangen (420) einer Lizenzanfrage von der Teilnehmervorrichtung (130), die mit dem geschlossenen Netzwerk (101) verbunden ist, wobei die Lizenzanfrage eine Funktionalitätskennung beinhaltet;
Vergleichen (430) der Funktionalitätskennung der Lizenzanfrage mit der Funktionalitätskennung der Vielzahl von Funktionalitätslizenzen; und
wenn eine Funktionalitätskennung einer Funktionalitätslizenz aus der Vielzahl von Vorrichtungslizenzen der Funktionalitätskennung der Lizenzanfrage entspricht, Zuweisen (440) der der Lizenzanfrage entsprechenden Funktionalitätslizenz an die Teilnehmervorrichtung (130), wobei das Zuweisen ein Speichern der Teilnehmervorrichtung (130) als lizenzierte Teilnehmervorrichtung in der Lizenzdatenbank umfasst.

2. Verfahren nach Anspruch 1, wobei das Verfahren weiterhin umfasst:
Scannen (450) des geschlossenen Netzwerks, um zu überprüfen, ob die lizenzierte Teilnehmervorrichtung noch mit dem geschlossenen Netzwerk verbunden ist; und
Wenn das Scannen ergibt, dass die lizenzierte Teilnehmervorrichtung nicht mehr mit dem geschlossenen Netzwerk verbunden ist, Löschen (470) der Teilnehmervorrichtung (130) als lizenzierte Teilnehmervorrichtung.

3. Verfahren nach einem der vorangegangenen Ansprüche, wobei das Verfahren weiterhin umfasst:
Abfragen (413) der Vielzahl von Teilnehmervorrichtungen, um die in dem geschlossenen Netzwerk (101) zugewiesenen Funktionalitätslizenzen zu bestimmen;
Abgleichen (414) der in dem geschlossenen Netzwerk zugewiesenen Funktionalitätslizenzen mit der Vielzahl von Funktionalitätslizenzen; und
Wenn der Abgleich ergibt, dass eine in dem geschlossenen Netzwerk (101) zugewiesene Funktionalitätslizenz nicht in der Vielzahl von Funktionalitätslizenzen beinhaltet ist, Hinzufügen (415) der zugewiesenen Funktionalitätslizenz zu der Vielzahl von Funktionalitätslizenzen.

4. Verfahren nach einem der vorangegangenen Ansprüche, weiterhin umfassend:
Zurückgeben (460) einer zugewiesenen Funktionalitätslizenz an die Lizenzdatenbank durch die Teilnehmervorrichtung (130); und
In Antwort auf das Zurückgeben, Löschen (470) der Teilnehmervorrichtung (130) als lizenzierte Teilnehmervorrichtung.

5. Verfahren nach einem der vorangegangenen Ansprüche, weiterhin umfassend:
wenn keine Funktionalitätskennung einer Funktionalitätslizenz aus der Vielzahl von Vorrichtungslizenzen der Funktionalitätskennung der Lizenzanfrage entspricht, Senden (431) einer Fehlernachricht an die Teilnehmervorrichtung (110, 120, 130).

6. Verfahren nach einem der Ansprüche 1 bis 4, weiterhin umfassend:
wenn keine Funktionalitätskennung einer Funktionalitätslizenz aus der Vielzahl von Vorrichtungslizenzen der Funktionalitätskennung der Lizenzanfrage entspricht, Kontaktieren (432) einer externen Lizenzdatenbank (140) über eine sichere Verbindung über ein von dem geschlossenen Netzwerk (101) getrenntes Netzwerk (102), um eine der Funktionalitätskennung der Lizenzanfrage entsprechende Funktionalitätslizenz zu der Vielzahl von Funktionalitätslizenzen hinzuzufügen.

7. Verfahren nach einem der vorangegangenen Ansprüche, wobei jede Funktionalitätslizenz der Vielzahl von Funktionalitätslizenzen weiterhin eine oder mehrere umfasst von einer Vorrichtungsklassenkennung und einer Lizenznehmerkennung.

8. Verfahren nach einem der vorangegangenen Ansprüche, wobei die Funktionalitätskennung jeder Funktionalitätslizenz der Vielzahl von Funktionalitätslizenzen eine lizenzierte Parametrierung der Teilnehmervorrichtung (110, 120, 130) beinhaltet und wobei die Funktionalitätskennung der Lizenzanfrage eine Parametrierung beinhaltet, die der Teilnehmervorrichtung von einer speicherprogrammierbaren Steuerung - SPS - (120) des geschlossenen Netzwerks (101) zugewiesen worden ist.

9. Verfahren nach einem der vorangegangenen Ansprüche, wobei die Funktionalitätskennung eine oder mehrere angibt von einer Logikfunktion einer Teilnehmervorrichtung (110, 120, 130) und einer Funktion einer E/A-Schnittstelle (133) der Teilnehmervorrichtung (110, 120, 130).

10. Verfahren nach einem der vorangegangenen Ansprüche, weiter umfassend: Initialisieren (411) der Lizenzdatenbank durch:
Abfragen (411a) der Vielzahl von Teilnehmervorrichtungen, um die in dem geschlossenen Netzwerk (101) zugewiesenen Funktionalitätslizenzen zu bestimmen; und
Hinzufügen (411b) der in dem geschlossenen Netzwerk zugewiesenen Funktionalitätslizenzen zu der Vielzahl von Funktionalitätslizenzen.

11. Verfahren (400) nach einem der vorangegangenen Ansprüche, weiter umfassend:
Initialisieren (412) der Lizenzdatenbank (140) durch Kontaktieren einer externen Lizenzdatenbank über eine sichere Verbindung über ein von dem geschlossenen Netzwerk (101) getrenntes Netzwerk (102), wobei die Vielzahl von Funktionalitätslizenzen von der externen Datenbank auf die Lizenzdatenbank übertragen wird.

12. Vorrichtung (110, 120, 130), umfassend:
mindestens eine Kommunikationsschnittstelle (112, 132), wobei die mindestens eine Kommunikationsschnittstelle (112, 132) eingerichtet ist, um mit einem geschlossenen Netzwerk (101) gekoppelt zu werden;
einen Speicher (114, 134), der eingerichtet ist, um eine Lizenzdatenbank und Programmanweisungen, die das Verfahren (400) nach einem der Ansprüche 1 bis 11 auszuführen, zu speichern; und
einen Prozessor (111, 131), der eingerichtet ist, um die in dem Speicher gespeicherten Programmanweisungen auszuführen.
